# EUROPÄISCHE PATENTSCHRIFT

(11) **EP 1 161 708 B1**
(45) Veröffentlichungstag und Bekanntmachung des Hinweises auf die Patenterteilung: **25.09.2002**
(21) Anmeldenummer: 00910530.5
(22) Anmeldetag: 15.02.2000
(51) Int. Cl.: G05B 15/02

(54) **VERFAHREN UND VORRICHTUNG ZUM BETRIEB EINER BRENNKRAFTMASCHINE**
METHOD AND DEVICE FOR OPERATING AN INTERNAL COMBUSTION ENGINE
PROCEDE ET DISPOSITIF POUR FAIRE FONCTIONNER UN MOTEUR A COMBUSTION INTERNE

(30) Priorität: 16.02.1999 DE 19906376
(43) Veröffentlichungstag der Anmeldung: 12.12.2001
(73) Patentinhaber: ROBERT BOSCH GMBH, 70442 Stuttgart (DE)
(72) Erfinder: KLEE, Peter, D-75438 Knittlingen (DE); ESTEGHLAL, Gholamabas, D-64293 Darmstadt (DE); MENRAD, Gudrun, D-70174 Stuttgart (DE); PFENDER, Andreas, D-74232 Abstatt (DE); HILLNER, Hans, D-76131 Karlsruhe (DE); MALLEBREIN, Georg, D-70825 Korntal-Muenchingen (DE)
(86) Internationale Anmeldenummer: DE0000418
(87) Internationale Veröffentlichungsnummer: WO00049473

(56) Entgegenhaltungen:
- EP-A- 0 533 474
- WO-A-97/13064
- PATENT ABSTRACTS OF JAPAN vol. 1997, no. 02, 28. Februar 1997 (1997-02-28) & JP 08 261032 A (MITSUBISHI MOTORS CORP), 8. Oktober 1996 (1996-10-08)

## Beschreibung

### Stand der Technik

Die Erfindung betrifft ein Verfahren und eine Vorrichtung zum Betrieb einer Brennkraftmaschine, insbesondere einer Brennkraftmaschine mit Direkteinspritzung (DE) oder Saugrohreinspritzung (SRE), und mit einem Steuergerät, wobei das Steuergerät bzw. seine Software eine Vielzahl von Funktionen und einen Scheduler zum Aktivieren der Funktionen aufweist.

Aus der noch unveröffentlichten Patentanmeldung DE 197 44 230 ist ein Steuergerät für ein System und ein Verfahren zum Betrieb eines Steuergeräts bekannt, bei dem das Steuergerät Funktionsmodule, einen Scheduler zur Aktivierung der Funktionsmodule und einen Prioritätsverwalter aufweist. Der Prioritätsverwalter ordnet den Funktionsmodulen veränderbare Prioritäten zu, die dann bei der Aktivierung von Funktionsmodulen durch den Scheduler berücksichtigt werden.

Der vorliegenden Erfindung liegt die Aufgabe zugrunde, ein Verfahren der gattungsgemäßen Art derart zu verbessern, daß Funktionen in Abhängigkeit von den Betriebsbedingungen der Brennkraftmaschine optimal aktiviert werden können.

Die Aufgabe der vorliegenden Erfindung wird mit den Merkmalen des Anspruchs 1 gelöst.

### Vorteile der Erfindung

Der besonders große Vorteil der vorliegenden Erfindung liegt darin, daß Funktionen, die in der momentan eingestellten Betriebsart nicht ablaufen dürfen, aktiv in die Betriebsartenkoordination eingreifen können. Weiterhin wird erreicht, daß Funktionen betriebsartunabhängig ihre Laufbereitschaft berechnen können.

Weitere Vorteile der Erfindung ergeben sich in Verbindung mit den Unteransprüchen aus der nachfolgenden Beschreibung von Ausführungsbeispielen.

### Zeichnung

Ausführungsbeispiele der Erfindung sind in der Zeichnung dargestellt und in der nachfolgenden Beschreibung näher erläutert.

Die Figur 1 zeigt schematisch eine Darstellung einer Brennkraftmaschine mit einem Steuergerät.

Die Figur 2 zeigt schematisch den Verfahrensablauf für die Berechnung der Laufbereitschaft der Funktionen.

Die Figur 3 zeigt schematisch den Verfahrensablauf eines erfindungsgemäßen Verfahrens zur Berechnung der Laufbereitschaft der Funktionen, wobei die betriebsartenabhängigen Bedingungen in Abhängigkeit von Betriebsbedingungen der Brennkraftmaschine überbrückt werden können.

Die Figur 4 zeigt schematisch den Verfahrensablauf eines erfindungsgemäßen Verfahrens zur Aktivierung der laufbereiten Funktionen.

Figur 5 zeigt ein Ablaufdiagramm des erfindungsgemäßen Verfahrens.

### Beschreibung der Ausführungsbeispiele

Die vorliegende Erfindung wird im folgenden am Beispiel einer Brennkraftmaschine mit Direkteinspritzung näher beschrieben, diese Erfindung kann jedoch auch zur Steuerung beliebiger elektromechanischer Systeme, die mit einer Steuervorrichtung ausgerüstet werden können, angewendet werden.

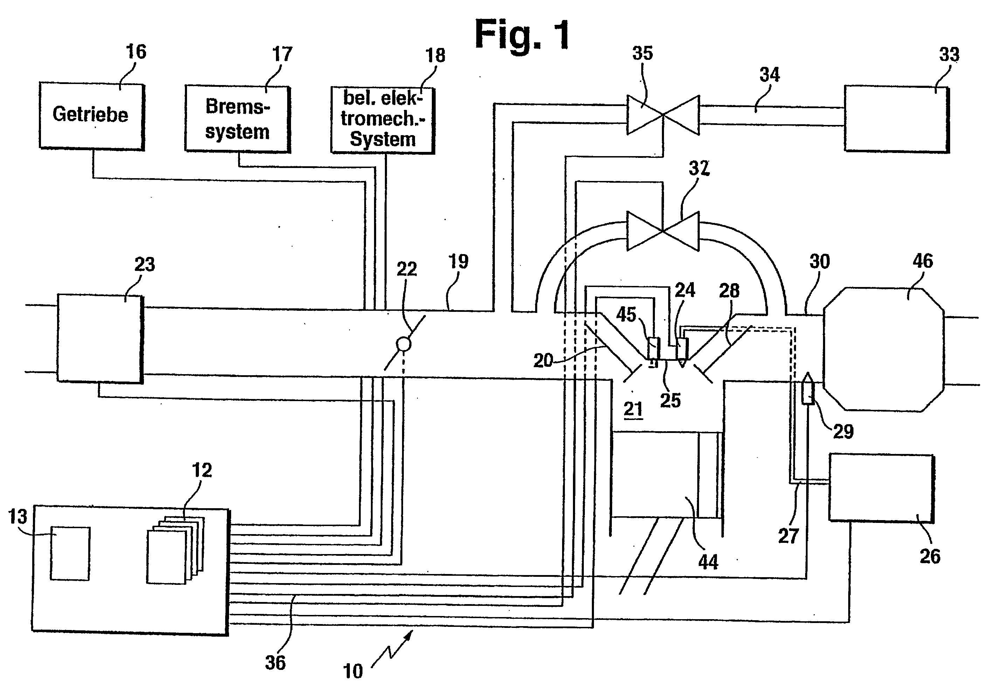

Wie in der Figur 1 dargestellt, wird bei einer Brennkraftmaschine mit Direkteinspritzung 10 Frischluft mittels eines Saugrohres 19 über ein Einlaßventil 20 einer Brennkammer 21 zugeführt. Über eine Drosselklappe 22 kann die Menge der in die Brennkammer 21 zugeführten Frischluft gesteuert werden. Ein Luftmengenmesser 23 erfaßt die in die Brennkraftmaschine einströmende Frischluft. Ein Einspritzventil 24 und eine Zündkerze 45 sind im Zylinderkopf 25 angeordnet. Mittels einer Hochdruckpumpe 26 wird der Kraftstoff auf einen Arbeitsdruck gebracht und über eine Kraftstoffleitung 27 und Einspritzventile 24 in die Brennkammer 21 eingespritzt. Mit Hilfe der Zündkerze 45 wird der eingespritzte Kraftstoff entzündet. Durch die Ausdehnung des entzündeten Kraftstoffs wird ein Kolben 44 angetrieben. Weiterhin weist die Brennkammer 21 ein Auslaßventil 28 zum Ausstoßen der bei einer Verbrennung entstehenden Abgase auf. Mittels einer Breitband-Lambda-Sonde (LSU) 29 im Abgasrohr 30 kann der Sauerstoffanteil im Abgas gemessen werden, wodurch das Luft-Kraftstoff-Verhältnis im Gemisch ermittelt werden kann. Im Abgasrohr 30 ist ein Katalysator 46 angeordnet. Der Katalysator 46 hat die Aufgabe, schädliche Abgaskomponenten, wie CO, HC und NO in CO₂, H₂O und N₂, umzuwandeln. Eine AGR-Leitung 31 verbindet das Ausstoßrohr 30 mit dem Saugrohr 19, wodurch aufgrund des höheren Drucks im Ausstoßrohr 30 Abgase vom Ausstoßrohr 30 in das Ansaugrohr 19 geleitet werden. Mit Hilfe des AGR-Ventils 32 kann der Abgasstrom in der AGR-Leitung 31 gesteuert werden. Von einem Kraftstofftank bzw. Aktivkohlebehälter 33 führt eine Tankentlüftungsleitung 34 zum Saugrohr 19, wodurch zusätzlich Kraftstoff in das Saugrohr 19 und damit auch in den Brennraum 21 gelangen kann. Mittels eines Tankentlüftungsventils 35 kann der Kraftstofffluß in der Tankentlüftungsleitung 34 gesteuert werden. Die Steuerung der gesamten Brennkraftmaschine 10 erfolgt mittels eines Steuergeräts 11. Weiterhin kann das Steuergerät 11 ein Getriebe 16, ein Bremssystem 17 und beliebige weitere elektromechanische Systeme 18 steuern. Über Signal- und Steuerleitungen 36 sind die verschiedenen Sensoren und Aktuatoren mit dem Steuergerät 11 verbunden.

Das Steuergerät 11 weist eine Vielzahl von Funktionen 12 und einen Scheduler 13 auf. Der Scheduler 13 verwaltet im allgemeinen Diagnose- und Motorsteuerfunktionen 12, die Kopplungen untereinander aufweisen und deshalb nicht gleichzeitig ablaufen dürfen. Ein Beispiel für Funktionen, die Kopplungen untereinander aufweisen, sind die Funktionen "Tankentlüftung" und "LSU-Diagnose". Die Funktion "Tankentlüftung", die zur Reduktion der Verdampfungsemissionen des Kraftstoffs dient, bewirkt, daß Kraftstoff aus dem Kraftstofftank bzw. Aktivkohlebehälter 33 in das Ansaugrohr 19 und dadurch in den Brennraum 21 gelangt. Die Funktion "LSU-Diagnose" überprüft die Funktionsfähigkeit der Breitband-Lambda-Sonde(LSU) 29. Hierzu sind jedoch definierte Bedingungen in der Kraftstoffund Luftzufuhr der Brennkraftmaschine 10 notwendig. Wird während der "LSU-Diagnose" die Funktion "Tankentlüftung" aktiviert, so strömt zusätzlicher Kraftstoff in den Brennraum 21, wodurch die Diagnosebedingungen sich ändern (erhöhte Kraftstoffzufuhr) und das Ergebnis der Diagnose verfälscht wird.

Die Brennkraftmaschine 10 kann in verschiedenen Betriebsarten betrieben werden, die sich im wesentlichen durch den Einspritzzeitpunkt und den Zündzeitpunkt unterscheiden. Zwischen den Betriebsarten der Brennkraftmaschine 10 kann mit Hilfe des Steuergeräts 11 umgeschaltet werden. Betriebsarten der Brennkraftmaschine 10 können sein: der Homogenbetrieb HOM, der homogene Magerbetrieb HMM, der Schichtbetrieb SCH, der Homogenschichtbetrieb HOS und der Schichtkatheizenbetrieb SKH.

Im Homogenbetrieb HOM, wird der Kraftstoff von dem Einspritzventil 24 während einer durch die Kolbenbewegung hervorgerufenen Ansaugphase in den Brennraum 21 eingespritzt. Über die Drosselklappe 22 und dem Einlaßventil 20 wird gleichzeitig Luft angesaugt. Die angesaugte Luft verwirbelt den Kraftstoff, der sich dadurch im Brennraum annähernd gleichmäßig bzw. homogen verteilt. Das Kraftstoff-Luft-Gemisch wird anschließend verdichtet, um dann von einer Zündkerze 45 entzündet zu werden. Das entzündete Kraftstoff-Luft-Gemisch dehnt sich aus und treibt den Kolben 44 an. Das entstehende Drehmoment hängt im Homogenbetrieb im wesentlichen von der Stellung der Drosselklappe 22 ab. Um ein hohes Drehmoment und eine geringe Schadstoffentwicklung bei der Verbrennung zu erzielen, wird das Luft-Kraftstoff-Gemisch möglichst auf λ = 1 oder λ < 1 eingestellt.

Im homogenen Magerbetrieb HMM wird der Kraftstoff wie bei dem Homogenbetrieb während der Ansaugphase in den Brennraum 21 eingespritzt. Im Unterschied zu dem Homogenbetrieb wird ein Luft-Kraftstoff-Gemisch mit λ > 1 eingestellt.

Im Schichtbetrieb SCH ist die Drosselklappe 22 im allgemeinen weit geöffnet. Der Kraftstoff wird während der Verdichtungsphase in der unmittelbaren Umgebung der Zündkerze 45 eingespritzt. Dann wird der Kraftstoff von der Zündkerze 45 entzündet und durch die folgende Ausdehnung des entzündeten Kraftstoffs der Kolben 44 angetrieben. Das entstehende Drehmoment hängt im Schichtbetrieb im wesentlichen von der eingespritzten Kraftstoffmasse ab.

Im Homogenschichtbetrieb HOS erfolgt eine Doppeleinspritzung. Hierbei wird Kraftstoff während der Ansaugphase und während der Verdichtungsphase in den Brennraum 21 eingespritzt. Der Homogenschichtbetrieb verbindet die Eigenschaften des Homogenbetriebs und des Schichtbetriebs. Mit Hilfe des Homogenschichtbetriebs kann beispielsweise ein besonders weicher Übergang vom Homogenbetrieb in den Schichtbetrieb und umgekehrt vom Schichtbetrieb in den Homogenbetrieb erreicht werden.

In der Betriebsart Schichtkatheizen SKH erfolgt auch eine Doppeleinspritzung. Der Kraftstoff wird während der Verdichtungsphase und während der Arbeitsphase oder während der Verdichtungsphase und während der Ausstoßphase in den Brennraum eingespritzt. Hierdurch wird eine schnelle Erwärmung des Katalysators bewirkt und im wesentlichen kein zusätzliches Drehmoment erzeugt. Diese Betriebsart ist beispielsweise beim Kaltstart der Brennkraftmaschine 10 von Bedeutung.

Die Funktionen 12 können im Steuergerät 11 verschiedene Zustände einnehmen. Zur übersichtlicheren und einfacheren Darstellung werden Funktionen 12, die den gleichen Zustand aufweisen, in Funktionslisten zusammengefaßt. Es ergeben sich folgende Funktionslisten:
- F-Liste 1: Liste aller zu verwaltenden Funktionen im Steuergerät 11
- F-Liste 2: Liste der laufbereiten Funktionen
- F-Liste 3: Liste der aktivierten Funktionen

Den Funktionen 12 werden Betriebsarten zugeordnet, in denen sie ablaufen dürfen. Ist die "falsche" Betriebsart eingestellt, d.h. eine Betriebsart in der Funktionen 12 nicht ablaufen dürfen, dann bleiben diese Funktionen 12 solange blockiert, bis die ihnen zugeordnete Betriebsart eingestellt ist.

Um die Laufbereitschaft einer Funktion 12 zu ermitteln, müssen eine Reihe von Bedingungen ausgewertet werden. Diese Bedingungen können in betriebsartenunabhängige Bedingungen und in betriebsartenabhängige Bedingungen eingeteilt werden. Die betriebsartenunabhängigen Bedingungen können jederzeit ausgewertet werden. Ein Beispiel für Bedingungen, die sich beim Wechsel in eine andere Betriebsart nicht verändern (betriebsartenunabhängigen Bedingungen), sind die Drehzahl nmot und die Temperatur tmot der Brennkraftmaschine 10. Die betriebsartenabhängigen Bedingungen können nur in der jeweiligen Betriebsart ausgewertet werden. Ein Beispiel hierfür ist der Saugrohrdruck ps.

Durch den Wechsel von einer Betriebsart der Brennkraftmaschine 10 in eine andere Betriebsart können sich die physikalischen Bedingungen ändern. Beispielsweise ist in der Betriebsart Homogen HOM bei niedrigen Lasten, aufgrund der weitgehend geschlossenen Drosselklappe 22, der Saugrohrdruck niedrig. In der Betriebsart Schicht SCH nimmt der Saugrohrdruck, aufgrund der im wesentlichen weit geöffneten Drosselklappe 22, einen hohen Wert ein, der annähernd dem atmosphärischen Druck entspricht.

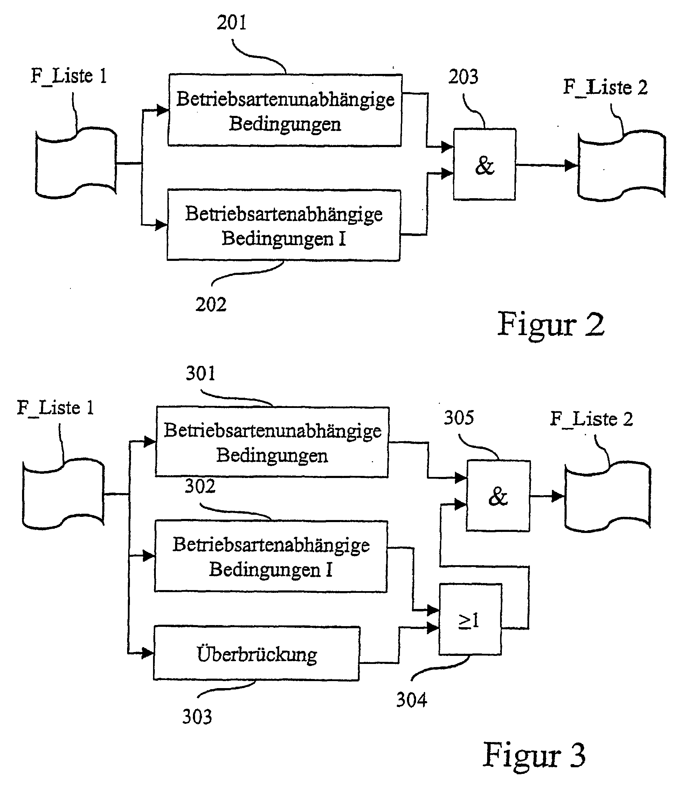

Zur Berechnung der Laufbereitschaft der Funktionen 12 wird, wie in der Figur 2 dargestellt, von einer Funktionsliste F-Liste 1 gleichzeitig der Eingang eines Blocks 201 zur Berechnung der betriebsartenunabhängigen Bedingungen und der Eingang eines Blocks 202 zur Berechnung der betriebsartenabhängigen Bedingungen I beaufschlagt. Die Ausgänge der Blöcke 201 und 202 beaufschlagen den Eingang eines Blocks UND-Verknüpfung 203. Am Ausgang des Blocks 203 erhält man eine Funktionsliste F-Liste 2 der laufbereiten Funktionen 12.

In einem Block 201 wird für die Funktionen der F-Liste 1 überprüft, ob die betriebsartenunabhängigen Bedingungen erfüllt sind. Gleichzeitig wird in einem Block 202 überprüft, ob die betriebsartenabhängigen Bedingungen erfüllt sind. In einem Schritt 203 werden die Ergebnisse aus den Schritten 201 und 202 mit Hilfe einer UND-Verknüpfung 203 miteinander verknüpft. Als Ergebnis erhält man eine Funktionsliste F-Liste 2 der laufbereiten Funktionen. Die F-Liste 2 enthält nur die Funktionen der P-Liste 1, für denen gleichzeitig die betriebsartenunabhängigen und die betriebsartenabhängigen Bedingungen erfüllt sind.

Da die physikalischen Bedingungen der Brennkraftmaschine 10 in Abhängigkeit von der momentan eingestellten Betriebsart unterschiedlich sein können, werden im allgemeinen die betriebsartenabhängigen Bedingungen nur für die Funktionen 12 der F-Liste 1 erfüllt sein, die in der momentan eingestellten Betriebsart ablaufen dürfen. In einer "falschen" Betriebsart, d.h. in einer Betriebsart in der eine Funktion nicht ablaufen darf, kann die Laufbereitschaft für diese Funktion nicht berechnet werden. Die Funktion bleibt blockiert, solange kein äußerer Einfluß "zufällig" die richtige Betriebsart erzwingt.

Das in Figur 3 dargestellte Ausführungsbeispiel behebt dieses Problem. Hier beaufschlagt eine F-Liste 1 gleichzeitig die Blöcke Betriebsartenunabhängige Bedingungen 301, Betriebsartenabhängige Bedingungen I 302 und einen Block Überbrückung 303. Die Ausgänge der Blöcke Betriebsartenabhängige Bedingungen I 302 und Überbrückung 303 beaufschlagen den Eingang eines Blocks ODER-Verknüpfung 304. Weiterhin beaufschlagen die Ausgänge der Blöcke ODER-Verknüpfung 304 und Betriebsartenunabhängige Bedingungen 301 den Eingang eines Blocks UND-Verknüpfung 305. Am Ausgang des Blocks UND-Verknüpfung 305 erhält man eine Funktionsliste F-Liste 2 der laufbereiten Funktionen 12.

Wie in der Figur 3 dargestellt, wird aus einer Funktionsliste F-Liste 1 aller im Steuergerät 11 zu verwaltenden Funktionen eine Funktionsliste F-Liste 2 der laufbereiten Funktionen gebildet. In einem Block 301 wird für die Funktionen der F-Liste 1 geprüft, ob die betriebsartenunabhängigen Bedingungen erfüllt sind. Gleichzeitig wird in einem Block 302 für die Funktionen der F-Liste 1 geprüft, ob die betriebsartenabhängigen Bedingungen erfüllt sind. Dies geschieht unabhängig davon, ob für die Funktionen der F-Liste 1 die Betriebsart eingestellt ist, in der diese Funktionen ablaufen dürfen, oder nicht. Weiterhin wird in einem Block 303 überprüft, ob ein Überbrückungssignal vorliegt. Mit Hilfe eines Überbrückungssignals wird der Block Betriebsartabhängige Bedingungen 302 quasi ausgeschaltet. Hierdurch wird die Laufbereitschaft der Funktionen nur noch in Abhängigkeit von den betriebsartenunabhängigen Bedingungen 301 ermittelt.

Ein Überbrückungssignal kann beispielweise in regelmäßigen Zeitabständen, in Abhängigkeit von bestimmten Ereignissen, Zuständen oder Betriebsbedingungen der Brennkraftmaschine global d.h. für alle Funktionen 12 generiert werden. Es können auch mehrere Überbrückungsignale existieren, die jeweils bestimmten Funktionen 12 fest zugeordnet sind, oder die dynamisch in Abhängigkeit von Betriebsbedingungen der Brennkraftmaschine den Funktionen 12 zugeordnet werden.

Dieses Ausführungsbeispiel stellt eine Erweiterung des in der Figur 2 dargestellten Ausführungsbeispiels dar. Hier können Funktionen 12, die in der momentan eingestellten Betriebsart nicht ablauffähig sind und für die deshalb nicht geprüft werden kann, ob die betriebsartenabhängigen Bedingungen erfüllt sind, auch laufbereit gesetzt werden. Voraussetung hierfür ist, daß die betriebsartenunabhängigen Bedingungen erfüllt sind. Die Funktionen 12, die eine Überbrückung der betriebsartenabhängigen Bedingungen erfordern, werden nur beschränkt laufbereit gesetzt, d.h. sie werden nur "laufbereit zu Testzwecken" gesetzt.

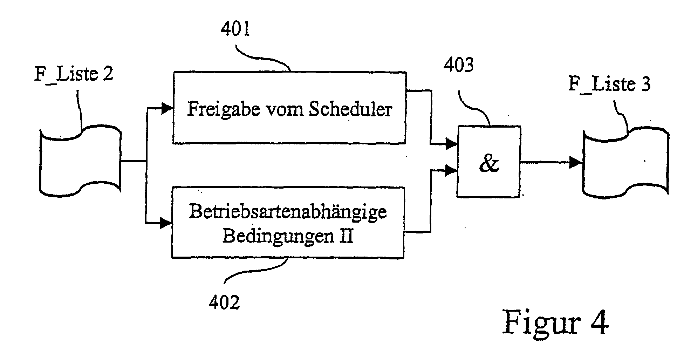

Wie in der Figur 4 dargestellt, beaufschlagt eine Funktionsliste F-Liste 2 der laufbereiten Funktionen 12 gleichzeitig die Eingänge der Blöcke betriebsartenabhängige Bedingungen II 402 und Freigabe vom Scheduler 401. Die Ausgänge der Blöcke 401 und 402 beaufschlagen den Eingang eines Blocks UND-Verknüpfung 403. Am Ausgang des Blocks 403 erhält man die Funktionsliste F-Liste 3 der aktivierten Funktionen.

In der Figur 4 werden die Funktionen von der Funktionsliste F-Liste 2, d.h. der Liste von Funktionen die laufbereit gesetzt wurden oder auch nur zu Testzwecken laufbereit gesetzt wurden, aktiviert. Dazu wird in einem Schritt 401 ein Auswahlverfahren im Scheduler 13 durchgeführt. In diesem Auswahlverfahren werden die Funktionen aus der Funktionsliste F-Liste 2 ausgewählt, die gleichzeitig ablauffähig sind. Weiterhin wird die Betriebsart ausgewählt, in der die ausgewählten Funktionen 12 ablaufen dürfen. Wenn keine weiteren Anforderungen anstehen, schaltet das Steuergerät 11 die Brennkraftmaschine 10 in die ausgewählte Betriebsart um. Nachdem in die Betriebsart umgeschaltet wurde, in der die ausgewählten Funktionen ablaufen dürfen, werden die ausgewählten Funktionen vom Scheduler 13 zur Aktivierung freigegeben. Im Block 402 wird für die Funktionen 12 der F-liste 2 geprüft, ob die betriebsartenabhängigen Bedingungen erfüllt sind.

Die Funktionen 12, die nur laufbereit zu Testzwecken gesetzt wurden, weil die Betriebsart in der sie ablaufen dürfen nicht eingestellt war, können nun im Schritt 402 (vorausgesetzt die richtige Betriebsart ist nun eingestellt) ein zweites mal prüfen, ob die betriebsartenabhängigen Bedingungen erfüllt sind. Sind die betriebsartenabhängigen Bedingungen dieser Funktionen nicht erfüllt, so wird die Laufbereitschaft dieser Funktionen wieder zurückgesetzt.

Wurden die Funktionen 12 im Block 401 vom Scheduler 13'zur Aktivierung freigegeben und sind die betriebsartenabhängigen Bedingungen II im Block 402 erfüllt, so werden im Block 403 die ausgewählten Funktionen 12 aktiviert.

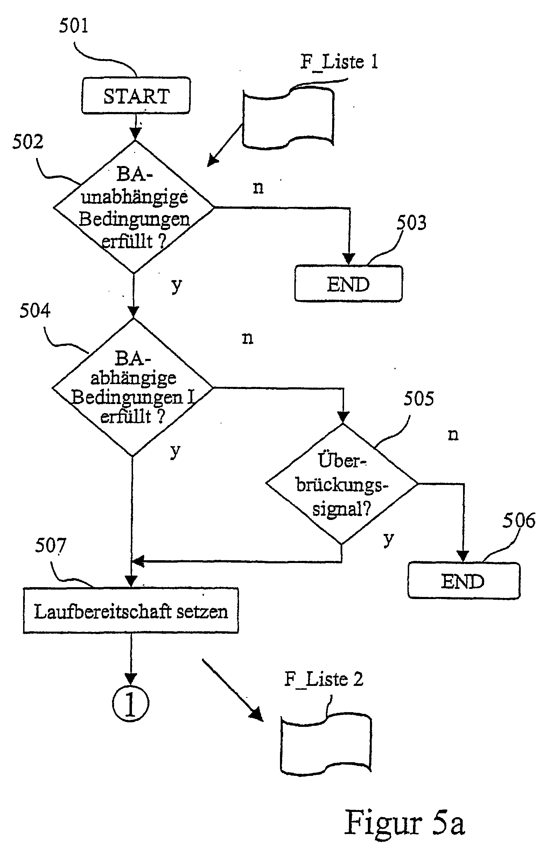

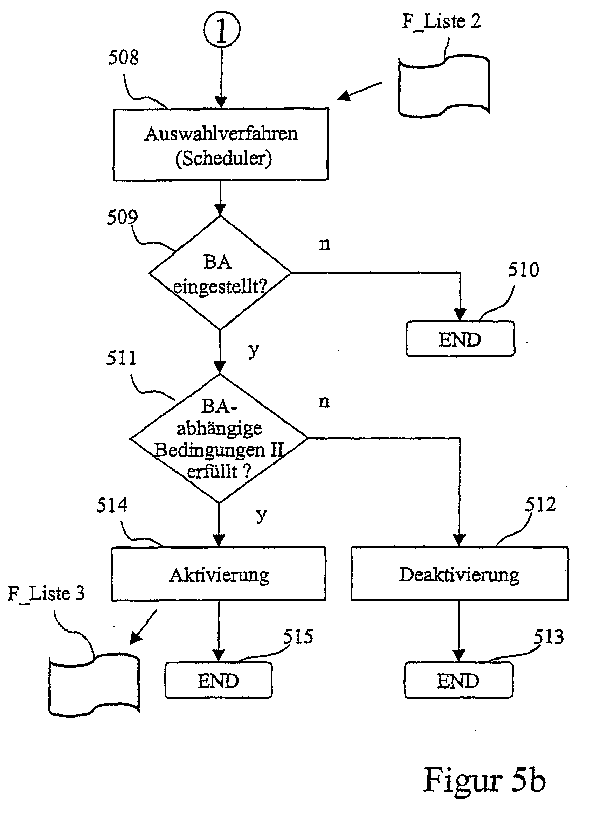

In der Figur 5 sind die Ausführungsbeispiele der Figuren 3 und 4 gemeinsam in einem Ablaufdiagramm dargestellt. Die Figur 5a stellt den ersten Teil und die Figur 5b den zweiten Teil des Verfahrens dar. Die Figuren 5a und 5b sind zusammenhängend zu betrachten und gehen ineinander über.

Nach einem Start des Verfahrens im Schritt 501 wird in einem Schritt 502 für jede Funktion der F-Liste 1 überprüft, ob die betriebsartenunabhängigen Bedingungen erfüllt sind. Sind die betriebsartenunabhängigen Bedingungen nicht erfüllt, so wird das Verfahren für diese Funktion in Schritt 503 beendet. Sind die betriebsartenunabhängigen Bedingungen dagegen erfüllt, so wird in einem Schritt 504 ein erstes mal geprüft, ob die betriebsartenabhängigen Bedingungen für diese Funktion erfüllt sind. Sind die betriebsartenabhängigen Bedingungen erfüllt, so wird die Funktion in Schritt 507 laufbereit gesetzt. Sind die betriebsartenabhängigen Bedingungen für diese Funktion nicht erfüllt, so wird in einem Schritt 505 überprüft, ob diese Funktion in der momentan eingestellten Betriebsart nicht ablaufen darf und ob ein Überbrückungssignal vorliegt. Liegt kein Überbrückungssignal für diese Funktion vor oder ist diese Funktion in der momentan eingestellten Betriebsart ablauffähig, so wird in einem Schritt 506 das Verfahren für diese Funktion beendet. Liegt ein Überbrückungssignal für diese Funktion vor und ist die momentan eingestellte Betriebsart eine Betriebsart, in der diese Funktion nicht ablaufen darf, so wird in einem Schritt 507 diese Funktion laufbereit zu Testzwecken gesetzt. Werden die beschriebenen Schritte auf alle Funktionen der F-Liste 1 angewendet, so erhält man eine Funktionsliste F-Liste 2 der laufbereiten Funktionen.

Alternativ zu dem oben beschriebenen Schritt 505 kann auch nur geprüft werden, ob ein Überbrückungssignal für die Funktion vorliegt. Es wird nicht geprüft, ob die Funktion in der momentan eingestellten Betriebsart ablaufen darf. Statt dessen wird sichergestellt, daß ein Überbrückungssignal nur dann für eine Funktion vorliegen kann, wenn die der Funktion zugeordnete Betriebsart nicht eingestellt ist. Dazu braucht man pro Betriebsart ein Überbrückungssignal.

Die Funktionen der F-Liste 2 nehmen in einem Schritt 508 an einem Auswahlverfahren im Scheduler 13 teil. Im Auswahlverfahren im Schritt 508 werden die Funktionen aus der F-Liste 2 ausgewählt, die gleichzeitig ablauffähig sind, außerdem wird eine Betriebsart ausgewählt, in der diese ausgewählten Funktionen ablaufen dürfen. Kann die ausgewählte Betriebsart vom Steuergerät 11 nicht eingestellt werden, so wird in einem Schritt 510 das Verfahren beendet. Wird dagegen die ausgewählte Betriebsart eingestellt, so wird für jede Funktionen 12 ein zweites mal in einem Schritt 511 überprüft, ob nun die betriebsartenabhängigen Bedingungen erfüllt sind. Sind die betriebsartenabhängigen Bedingungen für eine Funktion 12 nicht erfüllt, so wird die Laufbereitschaft dieser Funktion in einem Schritt 512 zurückgenommen und das Verfahren für diese Funktionen in Schritt 513 beendet. Sind die betriebsartenabhängigen Bedingungen für diese Funktion dagegen erfüllt, so wird diese Funktion in Schritt 514 aktiviert. Als Ergebnis erhält man eine Funktionsliste F-Liste 3 der aktivierten Funktionen 12. In einem Schritt 515 wird das Verfahren beendet.

## Patentansprüche

1. Verfahren zum Betrieb einer Brennkraftmaschine (10), insbesondere einer Brennkraftmaschine (10) mit Direkteinspritzung (DE) oder Saugrohreinspritzung (SRE) mit einem Steuergerät (11), wobei das Steuergerät (11) bzw. seine Software eine Vielzahl von Funktionen (12) aufweist, wobei die Funktionen (12) in Abhängigkeit von Betriebsbedingungen der Brennkraftmaschine (10) laufbereit gesetzt werden,
**dadurch gekennzeichnet, daß**
- die Brennkraftmaschine (10) in mindestens zwei Betriebsarten betreibbar ist und
- die Funktionen (12) in Abhängigkeit von betriebsartenabhängigen und betriebsartenunabhängigen Bedingungen der Brennkraftmaschine (10) laufbereit gesetzt werden.

2. Verfahren nach Anspruch 1, **dadurch gekennzeichnet, daß** die Funktionen (12) bei Auftreten vorbestimmter Betriebszustände der Brennkraftmaschine (10) in Abhängigkeit von den betriebsartenunabhängigen Bedingungen der Brennkraftmaschine (10) laufbereit gesetzt werden.

3. Verfahren nach Anspruch 2, **dadurch gekennzeichnet, daß** Funktionen (12), die nicht in der momentan eingestellten Betriebsart ablaufen dürfen und deren betriebsartenunabhängigen Bedingungen erfüllt sind, laufbereit gesetzt werden.

4. Verfahren nach Anspruch 2 oder 3, **dadurch gekennzeichnet, daß** das bei Auftreten vorbestimmter Betriebszustände der Brennkraftmaschine (10) ein globales Überbrückungssignal erzeugt wird.

5. Verfahren nach Anspruch 4, **dadurch gekennzeichnet, daß** das Überbrückungssignal in Abhängigkeit von der Ablaufhäufigkeit von Funktionen (12) ausgelöst wird.

6. Verfahren nach Anspruch 4 **dadurch gekennzeichnet, daß** das Überbrückungssignal zu vorbestimmten Zeitpunkten ausgelöst wird.

7. Verfahren nach Anspruch 4 **dadurch gekennzeichnet, daß** eine Vielzahl von Überbrückungssignalen zu verschiedenen Zeitpunkten erzeugt werden können und ein Überbrückungssignal mindestens einer Funktion (12) zugeordnet wird.

8. Verfahren nach Anspruch 7 **dadurch gekennzeichnet, daß** jedem Überbrückungssignal eine Betriebsart zugeordnet ist und ein Überbrückungssignal nur dann erzeugt wird, wenn die zugeordnete Betriebsart eingestellt ist.

9. Verfahren nach Anspruch 7, **dadurch gekennzeichnet, daß** die Überbrückungssignale fest oder in Abhängigkeit von Betriebsbedingungen der Brennkraftmaschine (10) dynamisch den Funktionen (12) zugeordnet werden.

10. Verfahren nach mindestens einem der vorhergehenden Ansprüche, **dadurch gekennzeichnet, daß** die Funktionen (12) Diagnose- und/oder Motorsteuer-Funktionen und/oder Betriebsarten der Brennkraftmaschine (10) darstellen.

11. Verfahren nach mindestens einem der vorhergehenden Ansprüche, **gekennzeichnet durch** seine Anwendung in einem Getriebe (16), Bremssystem (17) oder beliebigen elektromechanischen System (18).

12. Verfahren nach mindestens einem der vorhergehenden Ansprüche, **dadurch gekennzeichnet, daß** laufbereite Funktionen (12), die zur Aktivierung freigegeben wurden, nur dann aktiviert werden, wenn ihre betriebsartenabhängigen Bedingungen erfüllt sind und daß die Laufbereitschaft diese Funktionen (12) zurückgesetzt wird, wenn die betriebsartenabhängigen Bedingungen nicht erfüllt sind.

13. Verfahren nach Anspruch 12, **dadurch gekennzeichnet, daß** zur Überprüfung der betriebsartenabhängigen Bedingungen eine vorgegebene Zeitdauer zur Verfügung steht.

14. Steuergerät zum Betrieb einer Brennkraftmaschine mit einem Speicher, insbesondere Read-Only-Memory (ROM), und einem Rechengerät, insbesondere ein Mikroprozessor, wobei auf dem Speicher ein Programm abgespeichert ist, das auf dem Rechengerät ablauffähig und zur Ausführung eines Verfahrens nach mindestens einem der vorhergehenden Ansprüche geeignet ist.

## Claims

1. Method for operating an internal combustion engine (10), in particular an internal combustion engine (10) with direct injection (DE) or a manifold injection (SRE) with a controller (11), the controller (11) or its software having a multiplicity of functions (12), the functions (12) being made ready to operate in dependence on the operating conditions of the internal combustion engine (10), **characterized in that**
- the internal combustion engine (10) can be operated in at least two modes of operation, and
- the functions (12) are made ready to operate in dependence on those conditions of the internal combustion engine (10) which are dependent on the mode of operation and those which are independent of the mode of operation.

2. Method according to Claim 1, **characterized in that** when predetermined operating conditions of the internal combustion engine (10) occur, the functions (12) are made ready to operate in dependence on the conditions of the internal combustion engine (10) which are independent of the mode of operation.

3. Method according to Claim 2, **characterized in that** functions (12), which must not run in the instantaneously set mode of operation and whose conditions which are independent of the mode of operation are fulfilled, are made ready to operate.

4. Method according to Claim 2 or 3, **characterized in that** when predetermined operating conditions of the internal combustion engine (10) occur, a global bypass signal is generated.

5. Method according to Claim 4, **characterized in that** the bypass signal is triggered in dependence on the processing frequency of functions (12).

6. Method according to Claim 4, **characterized in that** the bypass signal is triggered at predetermined times.

7. Method according to Claim 4, **characterized in that** a multiplicity of bypass signals can be generated at different times and a bypass signal is assigned to at least one function (12).

8. Method according to Claim 7, **characterized in that** each bypass signal is assigned one mode of operation and a bypass signal is generated only if the assigned mode of operation is set.

9. Method according to Claim 7, **characterized in that** the bypass signals are assigned to the functions (12) in a fixed fashion or in a dynamic fashion in dependence on operating conditions of the internal combustion engine (10).

10. Method according to at least one of the preceding claims, **characterized in that** the functions (12) represent diagnostic functions and/or engine control functions and/or modes of operation of the internal combustion engine (10).

11. Method according to at least one of the preceding claims, **characterized by** its application in a transmission (16), brake system (17) or any desired electromechanical system (18).

12. Method according to at least one of the preceding claims, **characterized in that** functions (12) which are ready to operate and which have been released for activation are activated only if their conditions which are dependent on the mode of operation are fulfilled, and **in that** the readiness to operate of these functions (12) is reset if the conditions which are dependent on the mode of operation are not fulfilled.

13. Method according to Claim 12, **characterized in that** a predefined time period is available for checking the conditions which are dependent on the mode of operation.

14. Control device for operating an internal combustion engine with a memory, in particular a read-only memory (ROM), and a computing unit, in particular a microprocessor, a program which can run on the computing unit and. is suitable for executing a method according to at least one of the preceding claims being stored in the memory.

## Revendications

1. Procédé pour faire fonctionner un moteur à combustion interne (10) en particulier un moteur à combustion interne à injection directe (DE) ou à injection dans la tubulure d'admission (SRE), mettant en oeuvre un appareil de commande (11), cet appareil c'est-à-dire son programme présentant une pluralité de fonctions (12) rendues prêtes à l'emploi en fonction des conditions de fonctionnement du moteur,
**caractérisé en ce que**
- le moteur à combustion interne (10) peut être entraîné selon au moins deux modes de fonctionnement, et
- les fonctions (12) sont rendues prêtes à l'emploi en fonction de conditions du moteur (10) dépendant ou non du mode de fonctionnement.

2. Procédé selon la revendication 1,
**caractérisé en ce que**
les fonctions (12) sont rendues prêtes à l'emploi lorsqu'apparaissent des états de fonctionnement du moteur (10), prédéfinis en fonction de conditions indépendantes du mode de fonctionnement du moteur (10).

3. Procédé selon la revendication 2,
**caractérisé en ce que**
des fonctions (12), qui ne doivent pas être exploitées dans le mode de fonctionnement réglé à l'instant mais dont les conditions indépendantes du fonctionnement sont remplies, sont rendues prêtes à l'emploi.

4. Procédé selon la revendication 2 ou 3,
**caractérisé en ce que**
quand apparaissent des états de fonctionnement prédéfinis du moteur (10), un signal global de pontage est émis.

5. Procédé selon la revendication 4,
**caractérisé en ce que**
le signal de pontage est déclenché en fonction de la fréquence de déroulement de fonctions (12).

6. Procédé selon la revendication 4,
**caractérisé en ce que**
le signal de pontage est déclenché à des instants prédéfinis.

7. Procédé selon la revendication 4,
**caractérisé en ce que**
plusieurs signaux de pontage peuvent être émis à des instants différents et un signal de pontage est associé à au moins une fonction (12).

8. Procédé selon la revendication 7,
**caractérisé en ce qu'**
à chaque signal de pontage est associé un mode de fonctionnement et un signal de pontage est émis seulement quand le mode de fonctionnement associé est en cours.

9. Procédé selon la revendication 7,
**caractérisé en ce que**
les signaux de pontage sont associés aux fonctions (12), fixement ou dynamiquement en fonction des conditions de fonctionnement du moteur (10).

10. Procédé selon au moins un des revendications précédentes,
**caractérisé en ce que**
les fonctions (12) représentent des fonctions de diagnostic et/ou de commande et/ou des modes de fonctionnement du moteur (10).

11. Procédé selon au moins une des revendications précédentes,
**caractérisé en ce qu'**
il est utilisé dans une transmission (16), un système de freinage (17) ou dans un quelconque système électromécanique (18).

12. Procédé selon au moins une des revendications précédentes,
**caractérisé en ce que**
les fonctions (12) prêtes à l'emploi, qui ont été libérées pour être activées, le sont effectivement seulement quand sont remplies leurs conditions indépendantes du mode de fonctionnement, tandis que la mise en état prêt à l'emploi de ces fonctions (12) est retirée si les conditions de fonctionnement dépendant du mode de fonctionnement ne sont pas remplies.

13. Procédé selon la revendication 12,
**caractérisé en ce que**
pour contrôler les conditions dépendant du mode de fonctionnement, on dispose d'une durée prédéfinie.

14. Appareil de commande du fonctionnement d'un moteur à combustion interne, comprenant une mémoire, en particulier une mémoire ROM et un calculateur, en particulier un microprocesseur, la mémoire contenant un programme enregistré qui peut se dérouler dans le calculateur et est capable d'assurer l'exécution d'un procédé selon l'une des revendications précédentes.
